# EUROPÄISCHE PATENTSCHRIFT

(11) **EP 1 507 462 B1**
(45) Veröffentlichungstag und Bekanntmachung des Hinweises auf die Patenterteilung: **30.12.2009**
(21) Anmeldenummer: 03735430.5
(22) Anmeldetag: 21.05.2003
(51) Int. Cl.: A23L 2/02, C12G 3/00

(54) **VERFAHREN ZUR HERSTELLUNG EINES GETRÄNKESIRUPS BZW. EINES DARAUS BEREITETEN ERFRISCHUNGSGETRÄNKES**
METHOD FOR PRODUCING A BEVERAGE SYRUP AND A REFRESHING BEVERAGE PREPARED FROM SAID SYRUP
PROCEDE DE PRODUCTION D'UN SIROP DE BOISSON ET DE PREPARATION D'UNE BOISSON RAFRAICHISSANTE A PARTIR DE CE SIROP

(30) Priorität: 24.05.2002 AT 7982002
(43) Veröffentlichungstag der Anmeldung: 23.02.2005
(73) Patentinhaber: St. Martinus Company Ltd., Webber Street London, SE1 ORE (GB)
(72) Erfinder: VALOVIC, Ian, A-7082 Donnerskirchen (AT); NUHLICEK, Vladimir, A-7082 Donnerskirchen (AT)
(74) Vertreter: Puchberger, Peter
(86) Internationale Anmeldenummer: PCT/EP2003/005326
(87) Internationale Veröffentlichungsnummer: WO 2003/099042

(56) Entgegenhaltungen:
- EP-A- 0 213 220
- DE-U- 20 006 421
- US-B1- 6 383 546

## Beschreibung

Die vorliegende Erfindung bezieht sich allgemein auf ein Verfahren zur Herstellung eines Getränkesirups bzw. eines daraus bereiteten Erfrischungsgetränkes, insbesondere eines kohlensäurehaltigen Erfrischungsgetränkes.

Aufgabe der vorliegenden Erfindung ist es, ein Verfahren zur Herstellung eines Getränkesirups, dessen Hauptkomponenten Traubenmost und Wein (Weiß- bzw. Rotwein) sind und der ein Macerat von aromatisierenden Pflanzenbestandteilen, nämlich Holunderblüten, enthält, bzw. eines daraus durch Mischen mit Wasser und Zugabe von Kohlensäure bereiteten Erfrischungsgetränkes anzugeben.

Das erfindungsgemäße Verfahren ist durch die Schritte wie im Anspruch 1 dargestellt gekennzeichnet.

In einer speziellen Ausführungsform des Verfahrens wird der aufgezuckerte Traubenmost im Schritt (c) vor der Weiterverarbeitung zu dem Getränkesirup entschwefelt. Die im Schritt (c) eingesetzte organische Säure kann aus den auf dem Gebiet als Säuerungsmittel bzw. Antioxidantien bekannten organischen Säuren, beispielsweise aus der aus Weinsäure, Citronensäure, Ascorbinsäure und Mischungen davon bestehenden Gruppe, ausgewählt sein. Der gegebenenfalls verwendete Farbstoff kann ein natürlicher Farbstoff sein.

In dem optionalen Schritt (d) werden Wasser und der erhaltene Getränkesirup, gegebenenfalls getrennt, pasteurisiert, wobei jeweils auf 70 bis 80°C, vorzugsweise 73 bis 75°C, erhitzt und unmittelbar danach auf eine Temperatur von weniger als 5°C, vorzugsweise 2 bis 3°C, abgekühlt wird.

Die Herstellung des erfindungsgemäßen Erfrischungsgetränkes kann in einer so genannten Premix-Anlage erfolgen, die eine Entlüftungsanlage, eine Sättigungsanlage für das Einführen von Kohlensäure und eine Mischanlage aufweist. Nach dem Vermischen des pasteurisierten Wassers mit dem pasteurisierten Getränkesirup kann das gekühlte Getränk mit Kohlensäure gesättigt werden, bzw. es kann eine nicht pasteurisierte Mischung durch einen Durchlaufpasteur geleitet und mit Kohlensäure gesättigt werden. Das Abfüllen des erfindungsgemäß hergestellten Erfrischungsgetränkes kann in herkömmlichen Abfüllanlagen erfolgen.

Gemäß einem weiteren Merkmal der Erfindung kann ein aufgezuckerter Traubenmost, wie er insbesondere zur Verwendung im eingangs genannten Verfahren geeignet ist, wie folgt hergestellt werden. Traubenmost kann mit raffiniertem Zucker und mindestens einer organischen Säure, wie beispielsweise Citronensäure, versetzt, diese Mischung gegebenenfalls geschwefelt und abschließend, beispielsweise mittels eines Kremelinfilters, filtriert werden. Eine Behandlung mit Schönungsmitteln ist nicht erforderlich.

Im Falle einer Schwefelung des aufgezuckerten Traubenmostes kann der Schwefelgehalt bis zu 500 mg/l betragen. Aufgrund dieses relativ hohen Schwefelgehaltes kann der erfindungsgemäß hergestellte aufgezuckerte Traubenmost lange gelagert werden, d.h. er ist beispielsweise in emaillierten Stahltanks etwa ein Jahr lagerfähig.

Der beim Aufzuckern eingesetzte Traubenmost kann beispielsweise ein Traubenmost der Sorte Müller-Thurgau sein. Ein solcher unmittelbar nach der Pressung gewonnener Traubenmost wird gegebenenfalls hoch geschwefelt, nach mehreren Stunden, etwa 12 bis 18 Stunden, dekantiert und zur Entfernung unerwünschter Beimengungen zentrifugiert. Der solcherart vorbehandelte Traubenmost kann dann wie oben beschrieben aufgezuckert werden.

Gemäß einem weiteren Merkmal der Erfindung kann eine Aromakomponente, wie sie bei der erfindungsgemäßen Herstellung eines Erfrischungsgetränkes bzw. Getränkesirups zum Einsatz kommt, hergestellt werden, indem ein Holunderblüten-Aromatisierungsmacerat mit Wein, mindestens einer Ergänzungskomponente, gegebenenfalls mit mindestens einem Farbstoff und gegebenenfalls mit einem Schönungsmittel vermischt und diese Mischung gegebenenfalls zur Haltbarmachung geschwefelt und danach filtriert wird. Zweckmäßigerweise kann die Ergänzungskomponente aus der aus Muskatmark, Weinbrand, Zuckercouleur und Mischungen davon bestehenden Gruppe ausgewählt sein. Der verwendete Farbstoff kann ein natürlicher Farbstoff sein. Die Verwendung eines Schönungsmittels, wie beispielsweise Tannin, kann insbesondere bei der Herstellung einer Aromakomponente unter Verwendung von Rotwein zweckmäßig sein.

Der zum Mischen mit dem Holunderblüten-Aromatisierungsmacerat verwendete Wein kann ein qualitativ hochwertiger Wein sein, der im Falle der Verwendung von Weißwein beispielsweise aus der aus Traminer, Rheinriesling, Welschriesling, Müller-Thurgau und Mischungen davon bestehenden Gruppe und im Falle der Verwendung von Rotwein beispielsweise aus der aus Zweigelt, Blaufränkisch, Blauburgunder und Mischungen davon bestehenden Gruppe ausgewählt sein kann. Es können auch Mischungen von Weiß- und Rotwein eingesetzt werden.

Gemäß einem weiteren Merkmal der Erfindung kann ein Holunderblüten-Aromatisierungsmacerat, wie es insbesondere im erfindungsgemäßen Verfahren bei der Herstellung der Aromakomponente eingesetzt werden kann, wie folgt hergestellt werden. Aromatisierende Pflanzenbestandteile, nämlich frische oder getrocknete Holunderblüten (*Sambucus nigra*), können mit Wasser, gegebenenfalls mit Zucker, mit mindestens einer organischen Säure, wie beispielsweise Citronen- und/oder Weinsäure, und gegebenenfalls mit erfindungsgemäß hergestelltem aufgezuckertem Traubenmost gemischt werden. Zu dieser Mischung kann eine Hefesuspension zugesetzt werden, und es kann ein mehrtägiger Gärungsprozess folgen, wobei diese Gärung beispielsweise in rotierenden Tanks oder unter Rühren durchgeführt werden kann. Anschließend kann die Mischung zur Gewinnung eines Presssaftes gepresst, der Presssaft geschönt, filtriert und das Filtrat gegebenenfalls geschwefelt werden. Im Falle einer Schwefelung kann der freie Schwefelgehalt bis zu 40 mg/l betragen. Das Schönen kann beispielsweise durch Zugabe eines Schönungsmittels, etwa Bentonit, erfolgen, wobei der Bentonit typischerweise in einer Menge von etwa 100 g/hl verwendet wird. Die zugesetzte Hefekultur kann Weinhefe sein.

Im Folgenden werden beispielhaft Rezepturen für die Zubereitung von aufgezuckertem Traubenmost, Holunderblüten-Aromatisierungsmacerat, Aromakomponente, Getränkesirup und Erfrischungsgetränk nach dem erfindungsgemäßen Verfahren sowie typische Zusammensetzungsbereiche der genannten Produkte angeführt.

Zweckmäßigerweise kann in dem erfindungsgemäßen Verfahren Trinkwasser gemäß den jeweiligen Normen verwendet werden.

Gemäß dem erfindungsgemäßen Verfahren kann ein aufgezuckerter Traubenmost 52°RF, Dichte 1,243 (60 bis 70 g/100 ml), etwa nach folgender Rezeptur zubereitet werden (Angaben pro 100 I):

| | |
|---|---|
| Reiner Traubenmost, Dichte 1,061 - 200 g/l | 68,0 bis 68,9 l (72 bis 75 kg) |
| Raffinierter Zucker | 51,98 bis 52,17 kg (31 bis 32 l) |
| Citronensäure | 7 bis 13 g/l (0,65 bis 0,75 kg) |

Ein solcherart hergestellter aufgezuckerter Traubenmost kann wie folgt charakterisiert sein:

| | |
|---|---|
| Refraktion, 20°C | 52 Rf |
| Weinsäure | 10 bis 12 g/l |
| Flüchtige Säuren | 0,6 bis 0,9 g/l |
| Freies SO₂ | 250 bis 300 mg/l |

Gemäß dem erfindungsgemäßen Verfahren kann mit Holunderblüten (*Sambucus nigra*) als aromatisierenden Pflanzenbestandteilen ein Aromatisierungsmacerat, Dichte 0,992 bis 0,997, nach folgender Rezeptur zubereitet werden (Angaben pro 100 I):

| | |
|---|---|
| Frische Holunderblüten | 6,48 bis 12 kg |
| Aufgezuckerter Most | 33,25 bis 34,00 l |
| Trinkwasser | 63,95 bis 64,55 l |
| Hefesuspension | 1,9 bis 2,1 l |
| Citronen- und/oder Weinsäure | 0,18 bis 2,2 kg |

Ein solcherart hergestelltes Holunderblüten-Aromatisierungsmacerat kann beispielsweise folgende Inhaltsstoffe aufweisen:

| | |
|---|---|
| Alkohol | 8 bis 10 % |
| Freies SO₂ | 25 bis 45 mg/l |
| Weinsäure | 4 bis 8 g/l |
| Flüchtige Säuren..... | 1 bis 1,4 g/l |

Gemäß dem erfindungsgemäßen Verfahren kann unter Verwendung eines solchen Holunderblüten-Aromatisierungsmacerats und eines Weißweins beispielsweise eine Aromakomponente, Dichte 0,994 bis 0,998, nach der folgenden Rezeptur zubereitet werden (Angaben pro 100 kg):

| | |
|---|---|
| 1 Teil Holunderblüten-Aromatisierungsmacerat und | |
| 2 Teile Weißwein | zusammen 92,9 bis 93,6 kg |
| Muskatmark 40% | 4,4 bis 4,6 kg |
| Weinbrand (Brandy bonif. 50%) | 0,9 bis 0,95 kg |
| Zuckercouleur | 0,6 bis 0,7 kg |
| Farbstoff Zitronengelb | 0,01 bis 0,03 kg |
| Farbstoff Smaragdgrün | 0,0011 bis 0,0015 kg |

Eine derart hergestellte Aromakomponente kann beispielsweise folgende Inhaltsstoffe aufweisen:

| | |
|---|---|
| Alkoho max. | 14 % |
| Weinsäure | 5 bis 8 g/l |
| Flüchtige Säuren | 1 bis 1,4 g/l |
| Freies SO₂ | 30 bis 45 mg/l |
| Gesamtes SO₂ | 200 bis 260 mg/l |

Analog kann unter Verwendung eines solchen Holunderblüten-Aromatisierungsmacerats und eines Rotweins eine Aromakomponente nach folgender Rezeptur zubereitet werden (Angaben pro 100 kg):

| | |
|---|---|
| 1 Teil Holunderblüten-Aromatisierungsmacerat und | |
| 2 Teile Rotwein zusammen | 92,9 bis 93,6 kg |
| Muskatmark 40% | bis 4,0 kg |
| Brandy | bis 0,9 kg |
| Zuckercouleur | bis 0,9 kg |
| Farbstoff Brandy-Brown | bis 5 g |
| Tannin | bis 4 g |

Gemäß dem erfindungsgemäßen Verfahren kann ein Getränkesirup, Dichte 1,220 bis 1,228, beispielsweise unter Verwendung der obigen Aromakomponente, die unter Verwendung von Weißwein hergestellt wurde, nach folgender Rezeptur zubereitet werden (Angaben pro 100 I):

| | |
|---|---|
| Aufgezuckerter Traubenmost 52°RF | 86,0 bis 87,0 kg (69 bis 70 l) |
| Aromakomponente (Sambucus nigra) | 9,50 bis 9,65 kg (9,55 bis 9,7 l) |
| Weinsäure | 0,4 bis 0,48 kg (0,25 bis 0,28 l) |
| Citronensäure | 1,3 bis 1,5 kg |
| Ascorbinsäure | 0,0042 bis 0,0047 kg |
| Salz (NaCl) | 0,123 bis 0,139 kg |
| Trinkwasser | 1,2 bis 1,9 kg |

Ein solcher Getränkesirup kann beispielsweise folgende Inhaltsstoffe und Eigenschaften aufweisen:

| | |
|---|---|
| Trockensubstanzanteil 45% | ± 0,5 |
| Weinsäure | 20 bis 25 g/l |
| Gesamtes SO₂ | max. 25 mg/l |
| Dichte | 1,2 |

Daraus kann beispielsweise ein Getränk mit folgenden Inhaltsstoffen und Eigenschaften hergestellt werden, wobei etwa 25 bis 15 Vol.-% Sirup und etwa 75 bis 85 Vol.-% Trinkwasser vermischt werden:

| | |
|---|---|
| Trockengehalt | 6,0 bis 9,7 |
| Weinsäure | 2,1 bis 4,5 g/l |
| CO₂ | 4,1 bis 6,4 g/l |
| SO₂ | 12,3 bis 16,7 mg/l |
| Alkohol | 0,2 bis 0,4% |
| Refraktion, 20°C | 7,5 bis 10,4 RF |

Nach dem erfindungsgemäßen Verfahren kann ein Getränkesirup unter Verwendung einer Aromakomponente, die, wie oben beschrieben, unter Verwendung von Rotwein hergestellt wurde, beispielsweise nach folgender Rezeptur hergestellt werden (Angaben pro 100 I):

| | |
|---|---|
| Aufgezuckerter Traubenmost 52°RF | 86,0 bis 87,0 kg (69 bis 70 l) |
| Aromakomponente (Sambucus nigra) | 9,50 bis 9,65 kg (9,55 bis 9,7l) |
| Weinsäure | 0,4 bis 0,48 kg (0,25 bis 0,28 l) |
| Citronensäure | 1,3 bis 1,5 kg |
| Ascorbinsäure | 0,0042 bis 0,0047 kg |
| Farbstoff Burgundrot | 9 bis 11 g |
| Trinkwasser | 1,2 bis 1,9 kg |

Die Vorteile der Erfindung sind neben der ausgezeichneten Haltbarkeit des aufgezuckerten Traubenmostes, des Holunderblüten-Aromatisierungsmacerats, der Aromakomponente und des daraus hergestellten Getränkesirups bzw. Erfrischungsgetränkes auch der gute Geschmack des Getränkes, d.h. seine Fruchtigkeit, und die Tatsache, dass kein so genannter Kochgeschmack vorhanden ist. Ein weiterer Vorteil besteht darin, dass naturbelassene Weine und Traubenmoste sowie Holunderblüten aus kontrolliert ökologischem Anbau verwendet werden können. Das erfindungsgemäß hergestellte Erfrischungsgetränk ist als alkoholfrei zu bezeichnen. Die Haltbarkeit des abgefüllten Produktes beträgt etwa ein Jahr.

## Patentansprüche

1. Verfahren zur Herstellung eines Erfrischungsgetränkes bzw. eines dafür verwendbaren Getränkesirups, wobei der Getränkesirup mit Wasser und Kohlensäure zu dem fertigen Erfrischungsgetränk vermischbar ist, welches Verfahren **gekennzeichnet ist durch**
(a) Herstellen eines aufgezuckerten Traubenmostes **durch** Vermischen eines Traubenmostes mit raffiniertem Zucker und gegebenenfalls mit mindestens einer organischen Säure, wobei der Traubenmost ein geschwefelter Traubenmost ist oder nach dem Vermischen mit Zucker geschwefelt wird, und abschließendes Filtrieren dieser Mischung,
(b) Herstellen eines Holunderblüten-Aromatisierungsmacerats mit nachfolgender Weiterverarbeitung zu einer Aromakomponente **durch**
(b1) Mischen frischer oder getrockneter Holunderblüten (*Sambucus nigra*) mit Wasser, mit mindestens einer organischen Säure und gegebenenfalls mit Zucker und/oder aufgezuckertem Traubenmost, Zusetzen einer Hefesuspension zu der Mischung, mehrtägige Gärung dieser Mischung, Pressen der Mischung zur Gewinnung eines Presssafies, Schönen des Presssaftes, Filtrieren des Presssaftes und gegebenenfalls Schwefeln des Filtrats zur Herstellung des Holunderblüten-Aromatisierungsmacerats, wobei vorzugsweise der aufgezuckerte Traubenmost ein gemäß Schritt (a) hergestellter Traubenmost ist und vorzugsweise die Hefekultur eine Weinhefe ist,
(b2) Mischen des im Schritt (b1) erhaltenen Holunderblüten-Aromatisierungsmacerats mit Wein, der aus Weißwein, Rotwein oder Mischungen davon ausgewählt ist, und mindestens einer Ergänzungskomponente und Filtrieren, um die Aromakomponente zu erhalten, wobei gegebenenfalls ein Farbstoff und/oder ein Schönungsmittel zugesetzt wird und wobei gegebenenfalls vor dem Filtrieren geschwefelt wird,
(c) Weiterverarbeitung des im Schritt (a) erhaltenen aufgezuckerten Traubenmostes und der im Schritt (b2) erhaltenen Aromakomponente zu einem Getränkesirup unter Mischen mit mindestens einer organischen Säure, gegebenenfalls mit Salz, gegebenenfalls mit Farbstoff und mit Trinkwasser und abschließendem Filtrieren
und gegebenenfalls
(d) Mischen von Wasser und diesem Getränkesirup, wobei vor und/oder nach dem Mischen pasteurisiert wird, und Zugabe von Kohlensäure zur Herstellung des Erfrischungsgetränkes.

2. Verfahren nach einem Anspruch 1, **dadurch gekennzeichnet, dass** der eingesetzte Traubenmost ein Traubenmost der Sorte Müller-Thurgau ist.

3. Verfahren nach Anspruch 1 oder 2, **dadurch gekennzeichnet, dass** im Schritt (a) als organische Säure Citronensäure eingesetzt wird.

4. Verfahren nach einem der Ansprüche 1 bis 3, **dadurch gekennzeichnet, dass** der aufgezuckerte Most aus Schritt (a) vor der Weiterverarbeitung im Schritt (c) entschwefelt wird.

5. Verfahren nach einem der Ansprüche 1 bis 4, **dadurch gekennzeichnet, dass** die organische Säure im Schritt (c) aus Weinsäure, Citronensäure, Ascorbinsäure und Mischungen davon ausgewählt ist.

6. Verfahren nach einem der Ansprüche 1 bis 5, **dadurch gekennzeichnet, dass** der im Schritt (c) gegebenenfalls verwendete Farbstoff ein natürlicher Farbstoff ist.

7. Verfahren nach einem der Ansprüche 1 bis 6, **dadurch gekennzeichnet, dass** im Schritt (d) das Wasser und der Getränkesirup, gegebenenfalls getrennt, pasteurisiert werden, wobei auf 70 bis 80°C, vorzugsweise 73 bis 75°C, erhitzt und unmittelbar danach auf eine Temperatur von weniger als 5°C, vorzugsweise 2 bis 3°C, abgekühlt wird.

8. Verfahren nach einem der Ansprüche 1 bis 7, **dadurch gekennzeichnet, dass** die im Schritt (b2) eingesetzte Ergänzungskomponente aus Muskatmark, Weinbrand, Zuckercouleur und Mischungen davon ausgewählt ist.

9. Verfahren nach einem der Ansprüche 1 bis 8, **dadurch gekennzeichnet, dass** im Schritt (b2) der Weißwein aus der Gruppe Traminer, Rheinriesling, Welschriesling, Müller-Thurgau und Mischungen davon und/oder der Rotwein aus der Gruppe Zweigelt, Blaufränkisch, Blauburgunder und Mischungen davon ausgewählt ist.

10. Verfahren nach einem der Ansprüche 1 bis 9, **dadurch gekennzeichnet, dass** im Schritt (b2) gegebenenfalls verwendete Farbstoff ein natürlicher Farbstoff ist.

11. Verfahren nach einem der Ansprüche 1 bis 10, **dadurch gekennzeichnet, dass** im Schritt (b2) als Schönungsmittel Tannin eingesetzt wird.

12. Verfahren nach einem der Ansprüche 1 bis 11, **dadurch gekennzeichnet, dass** die organische Säure im Schritt (b1) Citronen- und/oder Weinsäure ist.

13. Verfahren nach einem der Ansprüche 1 bis 12, **dadurch gekennzeichnet, dass** im Schritt (b1) der Presssaft durch Zugabe von Bentonit geschönt wird.

14. Erfrischungsgetränk, hergestellt nach einem Verfahren nach einem der Ansprüche 1 bis 13.

## Claims

1. Method for producing a refreshing drink and/or a drink syrup usable therefor, wherein the drink syrup is miscible with water and carbon dioxide to give the finished refreshing drink, which method is **characterized by**
(a) production of a sugared grape must by mixing a grape must with refined sugar and optionally with at least one organic acid, wherein the grape must is a sulphited grape must or is sulphited after it is mixed with sugar, and final filtration of this mixture,
(b) production of an elderflower flavouring macerate with subsequent further processing to give a flavour component by
(b1) mixing fresh or dried elderflowers (*Sambucus nigra*) with water, with at least one organic acid, and optionally with sugar and/or sugared grape must, adding a yeast suspension to the mixture, fermenting this mixture for several days, pressing the mixture to obtain a pressed juice, fining the pressed juice, filtering the pressed juice and optionally sulphiting the filtrate for producing the elderflower flavouring macerate, wherein the sugared grape must is preferably a grape must produced according to step (a) and the yeast culture is preferably a wine yeast,
(b2) mixing the elderflower flavouring macerate obtained in step (b1) with wine which is selected from white wine, red wine or mixtures thereof, and at least one supplement component and filtering in order to obtain the flavour component, wherein a dye and/or a fining agent is optionally added and wherein the mixture is optionally sulphited before the filtration,
(c) further processing of the sugared grape must obtained in step (a) and the flavour component obtained in step (b2) to give a drink syrup involving mixing with at least one organic acid, optionally with salt, optionally with dye and with drinking water and final filtration
and optionally
(d) mixing of water and this drink syrup, wherein before and/or after the mixing pasteurization is carried out, and adding carbonic acid for the production of the refreshing drink.

2. Method according to Claim 1, **characterized in that** the grape must which is used is a grape must of the cultivar Müller-Thurgau.

3. Method according to Claim 1 or 2, **characterized in that**, in step (a), the organic acid used is citric acid.

4. Method according to any one of Claims 1 to 3, **characterized in that** the sugared must from step (a) is desulphurized before the further processing in step (c).

5. Method according to any one of Claims 1 to 4, **characterized in that** the organic acid in step (c) is selected from tartaric acid, citric acid, ascorbic acid and mixtures thereof.

6. Method according to any one of Claims 1 to 5, **characterized in that** the dye which is optionally used in step (c) is a natural dye.

7. Method according to any one of Claims 1 to 6, **characterized in that** the water and the drink syrup are pasteurized, optionally separately, in step (d), wherein the liquids are heated to 70 to 80°C, preferably 73 to 75°C, and immediately thereafter are cooled to a temperature of below 5°C, preferably 2 to 3°C.

8. Method according to any one of Claims 1 to 7, **characterized in that** the supplement component which is used in step (b2) is selected from muscat marc, brandy, caramel colour and mixtures thereof.

9. Method according to any one of Claims 1 to 8, **characterized in that**, in step (b2), the white wine is selected from the group Traminer, Rheinriesling, Welschriesling, Müller-Thurgau and mixtures thereof and/or the red wine is selected from the group Zweigelt, Blaufränkisch, Blauburgunder and mixtures thereof.

10. Method according to any one of Claims 1 to 9, **characterized in that** the dye which is optionally used in step (b2) is a natural dye.

11. Method according to any one of Claims 1 to 10, **characterized in that** tannin is used as fining agent in step (b2).

12. Method according to any one of Claims 1 to 11, **characterized in that** the organic acid in step (b1) is citric acid and/or tartaric acid.

13. Method according to any one of Claims 1 to 12, **characterized in that**, in step (b1), the pressed juice is fined by addition of bentonite.

14. Refreshing drink produced by a method according to any one of Claims 1 to 13.

## Revendications

1. Procédé pour la préparation d'une boisson rafraîchissante, respectivement d'un sirop utilisable à cet effet, le sirop de boisson pouvant être mélangé à de l'eau et à de l'acide carbonique pour donner la boisson rafraîchissante finie, le procédé étant **caractérisé par**
(a) la préparation d'un moût additionné de sucre par mélangeage d'un moût de raisin avec du sucre raffiné et, le cas échéant, avec au moins un acide organique, le moût de raisin étant un moût de raisin sulfité ou étant sulfité après le mélangeage avec le sucre, préparation suivie du filtrage de ce mélange,
(b) la préparation d'une macération de fleurs de sureau pour aromatisation avec un traitement ultérieur pour donner un composant aromatisant par
(b1) mélangeage de fleurs de sureau (*Sambucus nigra*) fraîches ou séchées avec de l'eau, avec au moins un acide organique et, le cas échéant, avec du sucre et/ou un moût de raisin sucré, addition au mélange d'une suspension de levure, fermentation de ce mélange pendant plusieurs jours, pressage du mélange pour l'obtention d'un jus de pressage, filtration du jus de pressage et, le cas échéant, sulfitage du filtrat pour la préparation de l'aromatisant de macération de fleurs de sureau, sachant que le moût de raisin sucré est de préférence un moût de raisin préparé selon l'étape (a) et que la culture de levure est de préférence une levure appropriée à produire du vin,
(b2) mélangeage de l'aromatisant de macération de fleurs de sureau obtenu à l'étape (b1) avec du vin, qui est choisi parmi du vin blanc, du vin rouge ou des mélanges de ceux-ci, et avec au moins un composant complémentaire, et filtration pour obtenir le composant aromatisant, un colorant et/ou un clarifiant étant ajoutés le cas échéant, et le produit étant sulfité le cas échéant avant la filtration,
(c) transformation ultérieure du moût de raisin sucré obtenu à l'étape (a) et de l'aromatisant obtenu à l'étape (b2) pour donner un sirop de boisson moyennant mélangeage avec au moins un acide organique, le cas échéant avec du sel, le cas échéant avec un colorant, et avec de l'eau, suivi d'une filtration
et, le cas échéant,
(d) mélangeage d'eau et de ce sirop de boisson, une pasteurisation s'effectuant avant et/ou après le mélangeage, et addition d'acide carbonique pour la préparation de la boisson rafraîchissante.

2. Procédé selon la revendication 1, **caractérisé en ce que** le moût de raisin utilisé est un moût de raisin du cépage müller-thurgau.

3. Procédé selon la revendication 1 ou 2, **caractérisé en ce que** dans l'étape (a), de l'acide citrique est utilisé comme acide organique.

4. Procédé selon l'une quelconque des revendications 1 à 3, **caractérisé en ce que** le moût additionné de sucre de l'étape (a) est désulfité avant la poursuite de sa transformation à l'étape (c).

5. Procédé selon l'une quelconque des revendications 1 à 4, **caractérisé en ce que** l'acide organique dans l'étape (c) est choisi parmi l'acide tartrique, l'acide citrique, l'acide ascorbique et des mélanges de ceux-ci.

6. Procédé selon l'une quelconque des revendications 1 à 5, **caractérisé en ce que** le colorant utilisé le cas échéant à l'étape (c) est un colorant naturel.

7. Procédé selon l'une quelconque des revendications 1 à 6, **caractérisé en ce qu'**à l'étape (d), l'eau et le sirop de boisson sont pasteurisés, le cas échéant séparément, lors de quoi ils sont chauffés entre 70 et 80 °C, de préférence entre 73 et 75 °C, et sont refroidis immédiatement après à une température de moins de 5 °C, de préférence entre 2 et 3 °C.

8. Procédé selon l'une quelconque des revendications 1 à 7, **caractérisé en ce que** le composant complémentaire employé à l'étape (b2) est choisi parmi la pâte de muscade, l'eau-de-vie, le colorant caramel et des mélanges de ceux-ci.

9. Procédé selon l'une quelconque des revendications 1 à 8, **caractérisé en ce qu'**à l'étape (b2), le vin blanc est choisi parmi le groupe du traminer, du riesling rhénan, du welschriesling, du müller-thurgau et des mélanges de ceux-ci, et/ou le vin rouge parmi le groupe du zweigelt, du blaufränkisch, du pinot noir et des mélanges de ceux-ci.

10. Procédé selon l'une quelconque des revendications 1 à 9, **caractérisé en ce que** le colorant utilisé le cas échéant à l'étape (b2) est un colorant naturel.

11. Procédé selon l'une quelconque des revendications 1 à 10, **caractérisé en ce qu'**à l'étape (b2), de l'acide tannique est utilisé comme clarifiant.

12. Procédé selon l'une quelconque des revendications 1 à 11, **caractérisé en ce que** l'acide organique dans l'étape (b1) est de l'acide citrique et/ou de l'acide tartrique.

13. Procédé selon l'une quelconque des revendications 1 à 12, **caractérisé en ce qu'**à l'étape (b1), le jus de pressage est clarifié par addition de bentonite. 14. Boisson rafraîchissante, préparée selon un procédé selon l'une quelconque des revendications 1 à 13.
